Europäisches Patentamt

European Patent Office

Office européen des brevets

(19)

(11) Veröffentlichungsnummer: **0 006 157**
**B1**

(12) **EUROPÄISCHE PATENTSCHRIFT**

(45) Veröffentlichungstag der Patentschrift:
23.01.85

(51) Int. Cl.⁴: **A 61 C 11/00, A 61 C 19/04**

(21) Anmeldenummer: **79101672.8**

(22) Anmeldetag: **31.05.79**

(54) **Intraorales Registrierbesteck.**

(30) Priorität: 09.06.78 DE 2825470
13.12.78 DE 2853828

(43) Veröffentlichungstag der Anmeldung:
09.01.80 Patentblatt 80/1

(45) Bekanntmachung des Hinweises auf die Patenterteilung:
23.01.85 Patentblatt 85/4

(84) Benannte Vertragsstaaten:
AT BE CH DE FR GB IT LU NL SE

(56) Entgegenhaltungen:
AT - B - 248 017
DE - A - 2 645 852
DE - U - 7 709 769
DE - U - 7 817 409
DE - U - 7 836 938
US - A - 2 245 288
US - A - 2 389 063
US - A - 2 528 153
US - A - 2 994 957
US - A - 3 068 570
US - A - 3 314 152
US - A - 3 557 453
US - A - 3 564 717

(73) Patentinhaber: **Dalberl, Karl, Dr. med. dent.,
Untersbergstrasse 4/II r, D-8000 München 90 (DE)**

(72) Erfinder: **Dalberl, Karl, Dr. med. dent.,
Untersbergstrasse 4/II r, D-8000 München 90 (DE)**

(74) Vertreter: **Schwan, Gerhard, Dipl.-Ing., Elfenstrasse 32,
D-8000 München 83 (DE)**

## Beschreibung

Die Erfindung betrifft ein intraorales Registrierbesteck für die Zahnprothetik, die Okklusionsdiagnostik und/oder die Okklusionstherapie mit starren Oberkiefer- und Unterkieferbißplatten, von denen die eine mit einer durchgehenden Gewindebohrung versehen ist, in die ein Stützstift eingeschraubt ist, dessen Spitze kugelig ausgebildet ist und für die Schlußbißnahme mit einer Öffnung im Bereich der der einen Bißplatte zugekehrten Oberfläche der anderen Bißplatte in Eingriff gebracht wird.

Registrierbestecke dieser Art sind bekannt (US-A-3 557 453). Dabei hat der Stützstift einen sich in Richtung auf seine Spitze konisch verjüngenden Schaft, dessen die Stützstiftspitze bildendes Ende abgerundet ist. Bei der Verwendung solcher Bestecke werden die beiden Bißplatten in den Ober- bzw. Unterkiefer zusammen mit Basisplatten (Bißschablonen oder Prothesen) eingesetzt und fixiert. Dann wird der Patient veranlaßt, mit dem Unterkiefer anterior-posterior und lateral gerichtete Gleitbewegungen auszuführen. Während dieser Bewegungen zeichnet die Stützstiftspitze auf der zweckmäßigerweise eingefärbten Oberfläche der anderen Bißplatte eine Figur auf, die Pfeilform hat und als Pfeilwinkel oder gotischer Bogen bezeichnet wird. Der Zahnarzt setzt dann auf die andere Bißplatte eine dünne Lochplatte (Retentionsplättchen) derart auf, daß die Mitte der Öffnung der Lochplatte mit der Pfeilspitze fluchtet. In dieser Position wird die Lochplatte mit Bezug auf die andere Bißplatte fixiert. Dann wird die andere Bißplatte in die Mundhöhle des Patienten erneut eingesetzt. Der Patient wird angewiesen, die Kiefer mit leichtem Druck zu schließen, wobei die Stützstiftspitze in die Öffnung der Lochplatte eindringen soll. Danach bringt der Zahnarzt Abdruckgips oder dergleichen zwischen die beiden Bißplatten, um diese in der betreffenden Stellung gegenseitig zu fixieren. Nach dem Erhärten des Gipsbreis können die Bißplatten gemeinsam aus der Mundhöhle entnommen werden.

Die Öffnungs- und Schließbewegung des Unterkiefers geschieht über einen Bereich von ungefähr den ersten zwei Zentimetern (benachbart der Schließstellung) kreisförmig um ein von den Kondylen gebildetes unbewegtes Zentrum. Die Lage der Kondylen in dieser Position ist durch den Begriff der retrograden Kontaktposition definiert, die Ausgangspunkt jeder funktionellen Analyse und prothetischen Behandlung ist. Sie darf bei der Bestimmung der Bißhöhe nicht verändert werden. Eine Myoarthropathie wäre die Folge.

Weil die Öffnungs- und Schließbewegung des Unterkiefers mit der Kondylenlage in retrograder Kontaktposition kreisförmig geschieht, muß auf diese Kreisform bei der vorzunehmenden Fixierung der gewählten Bißhöhe Rücksicht genommen werden. Das Entscheidende ist, daß es für jede Bißhöhe nur einen einzigen passenden Punkt auf der Horizontalebene der Unterkiefer-bißplatte in sagittaler Richtung gibt. Eine Erhöhung des Bisses um beispielsweise nur 0,5 mm bedeutet eine Verschiebung auch des Punktes in sagittaler Richtung.

Wird nun für die Retention der Stützstiftspitze über dem Registrierpunkt auf der anderen Bißplatte die Lochplatte angebracht, tritt eine Bißerhöhung ein, wenn der konische Teil der Stützstiftspitze bei der Schließbewegung auf die Lochplatte, insbesondere den oberen Rand der Lochplattenöffnung, auftrifft, bevor sich das vordere Ende der Stützstiftspitze gegen die Oberfläche der anderen Bißplatte anlegt. Die Registrierung wird verfälscht. Dies ist bei den bekannten Bestecken die Regel, weil aufgrund des kreisförmigen Schließbogens des Unterkiefers die Längsachsen von Stützstift und Lochplattenöffnung, die jeweils senkrecht zu der betreffenden Bißplatte stehen, stets in einem Winkel aufeinandertreffen. Um die Stützstiftspitze zur Anlage an der Oberfläche der anderen Bißplatte zu zwingen, wurden bisher oft, wenn auch in geringem Grade, die Kondylen des Unterkiefers aus der retrograden Kontaktposition disloziert. Eine solche Schlußbißnahme ist aber äußerst unerwünscht, weil sie zu Fehlbelastungen und dadurch bedingten Problemen, wie Kiefergelenkbeschwerden, parodontalen Erkrankungen oder Abrasion der Zahnoberflächen, führt. Angesichts der geschilderten Verhältnisse ist bei den bekannten Registrierbestecken die Genauigkeit beschränkt. Bei der Schlußbißnahme würde die Stützstiftspitze im Zusammenwirken mit der Öffnung der Lochplatte die auf der anderen Bißplatte aufgezeichnete Pfeilspitze nur dann genau treffen, wenn sich die Bißplatten und die Achsenrichtungen von Stützstiftspitze und Lochplattenöffnung am Schluß der Kieferbewegung exakt parallel in der Vertikalen annähern würden. Eine solche parallele Annäherung der Bißplatten, der Stützstiftspitze und der Öffnung der Lochplatte in der Schlußphase ist aber wegen der bei der Schließbewegung stets eine nach vorn gerichtete Komponente aufweisenden kreisförmigen Bewegung des Unterkiefers nicht möglich. Die Stützstiftspitze trifft daher infolge Verkantung gegenüber der Öffnungsachse meist vorzeitig auf den Rand oder die Innenwand der Öffnung. Es kommt zu einer Klemmwirkung und einer Fehlausrichtung zwischen Stützstiftspitze und Pfeilspitze. Die Folge sind eine Verfälschung der Registrierung bei der Fixierung sowohl in der Vertikalen (Bißhöhe) als auch in der Horizontalen sowie Kondylenverlagerungen.

Es ist ferner ein Registrierbesteck mit Bißplatten aus steifem Kunststoff bekannt (DE-U-7 709 769), bei dem der Stützstift in einer am verjüngten Ende eines konischken Stützstiftteiles starr angebrachten, kurzen, zylindrischen Stützstiftspitze ausläuft. Nach der Pfeilwinkelaufzeichnung wird die diese Aufzeichnung tragende Bißplatte an der Pfeilwinkelspitze durchbohrt. In die Bohrung wird bei der Schlußbißnahme die Stützstiftspitze eingerastet. Beschränkungen der Arbeitsgenauigkeit des Registrierbesteckes, die darauf zurückzuführen sind, daß in der Regel die Achsen des Stützstiftes und der Bohrung in der anderen Bißplatte bei der Kieferschließbewegung im Winkel zueinander stehen, sind bei diesem Registrierbesteck grundsätzlich in der gleichen Weise gegeben, wie dies oben bei der Diskussion des anderen bekannten intraoralen Registrierbestecks (US-A-3 557 453) geschildert ist.

Der Erfindung liegt die Aufgabe zugrunde, ein einfaches, vielseitig anwendbares, leicht zu handhabendes und sicher fixierbares Besteck für die intraorale Registrierung zu schaffen, das Registrierfehler weitestgehend ausschließt, die darauf zurückzuführen sind, daß in der Schlußphase der Bißbewegung Abweichungen hinsichtlich der Parallelität der Bißplatten und damit auch der gegenseitigen Ausrichtung der Längsachsen von Stützstift und Lochplattenöffnung bzw. Bißplattenbohrung vorliegen.

Ein intraorales Registrierbesteck für die Zahnprothetik, die Okklusionsdiagnostik und/oder die Okklusionstherapie mit starren Ober- und Unterkiefer-Bißplatten, von denen die eine mit einer durchgehenden Gewindebohrung versehen ist, in die ein Stützstift eingeschraubt ist, dessen Spitze kugelig ausgebildet ist und für die Schlußbißnahme mit einer Öffnung einer auf der anderen Bißplatte festlegbaren Lochplatte in Eingriff gebracht wird, ist erfindungsgemäß dadurch gekennzeichnet, daß die Bißplatten aus steifem Kunststoff bestehen und die Form einer vom Zahnbogen, dem Alveolarkamm oder der Residualleiste eines Oberkiefers bzw. Unterkiefers umschlossenen Flächenebene haben, daß die kugelige Stützstiftspitze als Kugelsegment ausgebildet ist, dessen frei liegende kugelige Oberfläche von dem auf der Längsachse des Stützstifts liegenden vorderen Stützstiftende allseitig um einen Winkel von mindestens 100° nach hinten reicht, derart, daß selbst bei der größten zu erwartenden gegenseitigen Verkantung der Bißplatten der der einen Bißplatte zugewendete Rand der Öffnung noch entlang seinem vollen Umfang an der kugeligen Oberfläche anliegt, und daß die Tiefe und der Durchmesser der Öffnung sowie der Durchmesser des Kugelsegments derart aufeinander abgestimmt sind, daß bei Anlage der Stützstiftspitze an der anderen Bißplatte der der einen Bißplatte zugewendete Rand der Öffnung mit der kugeligen Oberfläche praktisch spielfrei in Kontakt steht.

Entsprechend einer Abwandlung der Erfindung ist ein intraorales Registrierbesteck für die Zahnprothetik, die Okklusionsdiagnostik und/oder die Okklusionstherapie mit aus steifem Kunststoff bestehenden starren Ober- und Unterkiefer-Bißplatten, von denen die eine mit einer durchgehenden Gewindebohrung versehen ist, in die ein Stützstift eingeschraubt ist, dessen Spitze für die Schlußbißnahme mit einer Bohrung in der anderen Bißplatte in Eingriff gebracht wird, erfindungsgemäß dadurch gekennzeichnet, daß die Bißplatten die Form einer vom Zahnbogen, dem Alveolarkamm oder der Residualleiste eines Oberkiefers bzw. Unterkiefers umschlossenen Flächenebene haben, daß die Stützstiftspitze als mit dem Stützstiftschaft starr verbundenes Kugelsegment ausgebildet ist, daß die Bohrung einen Durchmesser hat, der um einen vorbestimmten Betrag kleiner als der Durchmesser des Kugelsegments ist, daß die frei liegende Oberfläche des Kugelsegments von dem auf der Längsachse des Stützstifts liegenden vorderen Stützstiftende allseitig um einen Winkel von mindestens 100° nach hinten reicht, derart, daß selbst bei der größten zu erwartenden gegenseitigen Verkantung der Bißplatten der der einen Bißplatte zugewendete Rand der Bohrung noch entlang seinem vollen Umfang an der kugeligen Oberfläche anliegt, sowie daß die eine Bißplatte Markierungen zur genauen Anzeige der axialen Stützstiftverstellung in Abhängigkeit von der Größe der Stützstiftverdrehung zwecks Kompensation der Einsinktiefe der Stützstiftspitze in der Bohrung trägt.

Bei dem Registrierbesteck nach der Erfindung erstreckt sich die kugelige Oberfläche der Stützstiftspitze bis über die Ebene des zur Stützstiftachse senkrecht stehenden Großkreises des Kugelsegments nach hinten. Dadurch wird in Verbindung mit den weiteren erfindungsgemäßen Maßnahmen erreicht, daß im Verlauf der Schlußbißnahme die andere Bißplatte bei allen möglichen in der Praxis zu erwartenden Bißplattenverkantungen trotz kreisförmigem Schließbogen des Unterkiefers sicher und störungsfrei an die Stützstiftspitze angelagert werden kann. Die Kugel kann, da die Kugeloberfläche entsprechend weitreichend ausgebildet ist, bis zum Äquator in die Lochplattenöffnung bzw. die Bißplattenbohrung einfallen, egal aus welcher Richtung sie kommt. Beim Schluß von Stützstiftspitze und Bohrung kommt es zu keiner erzwungenen Kieferverkantung und keiner Kondylenverlagerung. Auch bei in Schräglage zueinander stehenden Bißplatten liegt der Rand der Lochplattenöffnung oder der Bißplattenöffnung, welcher der den Stützstift tragenden Bißplatte zugekehrt ist, entlang seinem vollen Umfang praktisch spielfrei an der kugeligen Oberfläche an, während sich gleichzeitig die Stützstiftspitze an die die Lochplatte tragende Bißplatte anlegt bzw. die Eindringtiefe der Kugel in die Bißplattenbohrung exakt ausgeglichen werden kann. Durch Bißplattenverkantung bei bekannten Registrierbestecken ausgelöste Fehler sind so sicher vermieden. Die kugelige Stützstiftspitze trifft immer problemlos und genau den Ort der aufgezeichneten Pfeilspitze. Auslenkungen des Unterkiefers auch nur um einige Zehntel Millimeter aus seiner gelenkbezüglichen zentrischen Lage und darauf zurückgehende schwere Störungen und Zerstörungen im mastikatorischen System sind ausgeschlossen. Registrier- und Fixiergenauigkeiten in der Größenordnung von 1/100 mm werden ohne weiteres möglich. Die vorgesehene Form der Bißplatten gewährleistet ferner eine sichere, großflächige und gegen Kippbeanspruchungen unempfindliche Fixierung der Bißplatten im Unter- und Oberkiefer während der Aufzeichnung des gotischen Bogens und der Schlußbißnahme. Ferner ist es möglich, eine mit dem definitiven Zahnersatz übereinstimmende Lagerung des Registrierbestecks herbeizuführen, da jeder Punkt des Zahnbogens mit den Bißplatten angelagert, aufgelagert oder ausgespart werden kann. Es lassen sich daher rein gingivale, dentale oder gemischt gingival-dentale Lagerungen leicht erzielen. Die Fehlerquellen bekannter intraoraler Registrierbestecke bei der Fixierung der beiden Bißplatten nach Schlußbißnahme sind damit auf einfache und wirkungsvolle Weise ausgeschaltet.

Die Oberfläche des Kugelsegments erstreckt sich vorteilhaft symmetrisch zum vorderen Stützstiftende über einen Raumwinkel von 220° bis 320°, vorzugsweise von 250° bis 320°. Solche Raumwinkel lassen auch größere Verkantungen der Bißplatten bei der Schlußbißnahme zu, ohne daß die Genauigkeit der Registrierung und Fixierung leidet. Der Raumwinkel der kugeligen Oberfläche ist nach oben nur durch Gesichtspunkte der Festigkeit und der einfachen Fertigung begrenzt. Bei einem Raumwinkel über 320° kann der Werkstoffquerschnitt, über den die Kugelspitze mit dem Stützstiftschaft in fester Verbindung steht, zu klein werden.

Vorzugsweise sitzt die kugelige Stützstiftspitze an der dem Stützstiftschaft zugewendeten Seite auf einem an seinem breiteren Ende mit dem Stützstiftschaft verbundenen Kegelstumpf auf, dessen mit der kugeligen Stützstiftspitze verbundenes verjüngtes Ende einen kleineren Durchmesser als den Kugeldurchmesser hat. Dadurch ist die Gefahr ausgeschlossen, daß sich bei der Schlußbißnahme der Rand der Öffnung in unerwünschter Weise gegen den Kegelstumpf anlegt.

Der an die kugelige Stützstiftspitze anschließende Teil des Stützstifts, also z. B. der vorerwähnte Kegelstumpf, kann zweckmäßig mit mindestens zwei einander gegenüberliegenden Abflachungen versehen sein, die auch als Vier- oder Sechskant ausgebildet sein können und die mit einem Werkzeug nach Art eines Schraubenschlüssels zum Drehen des Stützstiftes in Eingriff gebracht werden. Dies erlaubt es, den Stützstift im Bedarfsfall auch bei in der Mundhöhle eingesetzter Bißplatte zu verstellen.

Die Lochplatte kann einfach als kreisförmige Scheibe ausgebildet sein. Es kann sich um ein Selbstklebteil handeln, d. h. ein Bauteil, das an seiner einen Hauptfläche einen selbstklebenden Überzug trägt. Die Lochplatte kann zweckmäßig aus Folienmaterial bestehen.

Um die für eine genaue Registrierung notwendige Steifigkeit zu erzielen, können die Bißplatten zweckmäßig mit einer Verstärkung aus Glasfasern, Kohlefasern oder Metall versehen sein. Zusätzlich oder statt dessen können an den Bißplatten Versteifungsrippen oder ähnliches angeformt sein. Insbesondere kann es zweckmäßig sein, die Bißplatten in ihrem mittleren Bereich zu verdicken.

Es ist möglich, für unterschiedlich große Kiefer unterschiedliche Bißplattengrößen anzufertigen und auf Lager zu halten. Wenn aber die Bißplatten so bemessen werden, daß sie die Fläche, die der Zahnbogen eines großen Ober- bzw. Unterkiefers beschreibt, allseits um ca. 1 cm überragen, kann mit einer einzigen Registrierbesteck-Standardgröße ausgekommen werden. Die Bißplatten werden bei der Anwendung lediglich auf die benötigte Form und entsprechend der jeweiligen Kieferbezahnung zugeschnitten. Um das Zurechtschneiden zu erleichtern, sind diese vorzugsweise mindestens in ihrem Randbereich opak, durchscheinend oder klar.

Als zweckmäßig erwies es sich, wenn das Außengewinde des Stützstiftes einen etwas (Bruchteile eines Millimeters) größeren Durchmesser als die den Stützstift aufnehmende Gewindebohrung hat. Dies sorgt für eine gewisse Schwergängigkeit des Stützstiftes, die verhindert, daß sich der Stützstift nach der Pfeilwinkelaufzeichnung unbeabsichtigt verstellt.

Aus statischen Gründen ist die den Stützstift aufnehmende Gewindebohrung vorteilhaft an einer im wesentlichen mit dem Schwerpunkt der Unterkieferspange ausgerichteten Stelle der einen Bißplatte angeordnet. Dies sorgt automatisch für eine richtige Zentrierung der Kondylen in den Gelenkgruben.

Die Gewindebohrung kann in der einen Bißplatte selbst ausgebildet sein. Eine stabilere Halterung des Stützstifts wird erzielt, wenn die den Stützstift tragende Bißplatte mit einem den Stützstift aufnehmenden Gewindestutzen versehen ist, der von der der anderen Bißplatte abgewendeten Seite der einen Bißplatte vorsteht.

Die Erfassung der gelenkbezüglichen Lage des Unterkiefers zum Oberkiefer, in welcher die Kiefergelenkköpfchen im höchsten Punkt der Gelenkgrube zentriert werden, geschieht bei gesundem Kiefergelenk nach dem Prinzip der Dreipunktabstützung und setzt voraus, daß der Stützstift zentral angeordnet ist. Weicht der Stützstift von der zentralen Anordnung in der Sagittalen oder Transversalen ab, kommt es zu einer Verkantung des Unterkiefers und daraus resultierender Verlagerung der Kiefergelenkköpfchen in den Kiefergelenkpfannen. Diese klinische Erfahrung macht man sich bei Patienten zunutze, die an Symptomen einer Myoarthropatie leiden und bei denen die Kiefergelenkköpfchen in der Gelenkpfanne therapeutisch so lange verlagert werden sollen, bis Schmerzlinderung oder Schmerzfreiheit beim Schlußbiß erreicht wird. Um in derartigen Fällen eine Änderung der Stützstiftposition in der Sagittalen oder Transversalen herbeiführen zu können, ist in weiterer Ausgestaltung der Erfindung vorgesehen, daß eine zur Aufnahme des Stützstifts dienende Gewindebuchse in einer Ausnehmung der einen Bißplatte in zwei in der Bißplattenebene liegenden, zur Stützstiftachse senkrechten Richtungen verstellbar geführt und über einen von der Gewindebuchse radial nach außen vorspringenden Klemmansatz sowie eine auf die Gewindebuchse aufgeschraubte Spannmutter fixierbar ist und daß sowohl der auf der einen Seite der einen Bißplatte angeordnete Klemmansatz der Gewindebuchse als auch die auf der anderen Bißplattenseite liegende Spannmutter mit die Ausnehmung der einen Bißplatte in jeder beliebigen Relativstellung von Gewindebuchse und Bißplatte übergreifenden Teilen versehen sind, die sich zwecks Fixierung der Gewindebuchse an die gegenüberliegenden Öffnungsränder der einen Bißplatte anlegen.

Als die Ausnehmung der einen Bißplatte übergreifende Teile können Ringflansche oder beliebige andere vorspringende Ansätze vorhanden sein. Eine besonders bequeme Handhabung wird erreicht, wenn die Gewindebuchse und/oder die Spannmutter mit flügelförmigen Radialansätzen versehen sind. Solche Ansätze erlauben ein sicheres Fassen von Gewindebuchse und Spannmutter.

Als besonders zweckmäßig erwiesen sich jeweils vier in einem gegenseitigen Winkel von 90° stehende Radialansätze für die Gewindebuchse und/oder die Spannmutter.

Die eine Bißplatte trägt vorteilhaft an der mit den Radialansätzen der Gewindebuchse zusammenwirkenden Breitseite zwei rechtwinklig zueinander verlaufende, eingravierte Graduierungen. Vorzugsweise haben dabei die den eingravierten Graduierungen zugewendeten Seiten der Radialansätze ein zu der Graduierung komplementäres, beispielsweise schneidenartiges Oberflächenprofil. Dies erlaubt eine bequeme rastende Verstellung des Stützstiftes in der Bißplattenebene. Die Radialansätze bilden zusammen mit den Graduierungen Verdrehsicherungen, die ein unerwünschtes Verdrehen der Gewindebuchse verhindern, wenn durch die schraubende Bewegung der Spannmutter die Klemmverbindung zwischen der einen Bißplatte und der aus Stützstift, Gewindebuchse und Spannmutter bestehenden Einheit angezogen oder gelöst werden soll.

Die Erfindung ist im folgenden anhand von bevorzugten Ausführungsbeispielen näher erläutert. In den Zeichnungen zeigt

Fig. 1 in auseinandergezogener perspektivischer Darstellung die obere Bißplatte mit Stützstift, die Lochplatte und die untere Bißplatte eines erfindungsgemäßen Registrierbestecks,

Fig. 2 in größerem Maßstab eine Teilschnittansicht des Registrierbestecks bei in die Lochplatte eingreifender Stützstiftspitze,

Fig. 3 eine Teilschnittansicht ähnlich Fig. 2 für eine abgewandelte Ausführungsform des Registrierbestecks,

Fig. 4 eine Draufsicht auf die Ausführungsform nach Fig. 3,

Fig. 5 einen Querschnitt durch eine abgewandelte Ausführungsform einer Bißplatte mit dreidimensional verstellbarem Stützstift entlang der Linie V-V der Fig. 6,

Fig. 6 eine Ansicht der Bißplatte nach Fig. 5 von unten,

Fig. 7 eine Ansicht der Bißplatte nach Fig. 5 von oben und

Fig. 8 in größerem Maßstab einen Teilschnitt entlang der Linie VIII-VIII der Fig. 5.

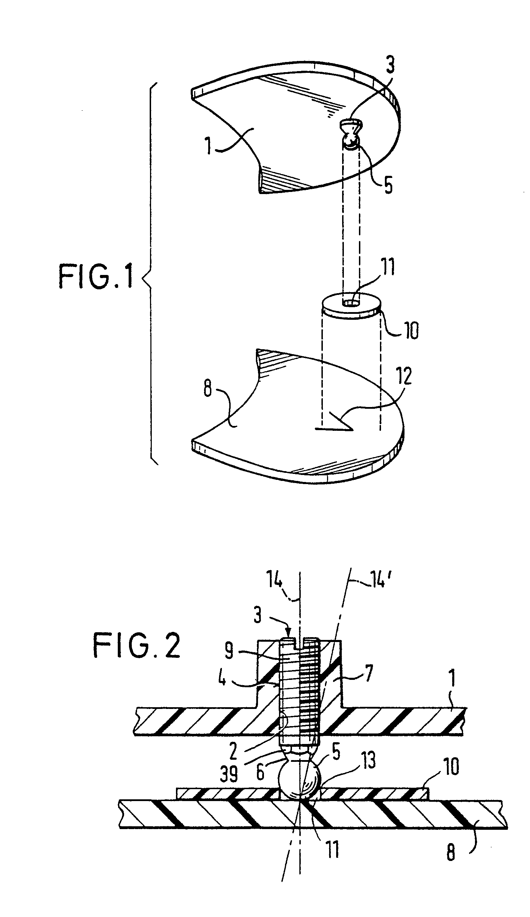

Die vorzugsweise aus faserverstärktem Kunststoff bestehende, beispielsweise bis zu 3 mm dicke Oberkiefer-Bißplatte 1 gemäß den Fig. 1 und 2 ist an der in Fig. 2 oberen Seite mit einem Gewindestutzen 7 einteilig verbunden. Der Gewindestutzen 7 und der daran anschließende Teil der Bißplatte 1 sind mit einer Gewindebohrung 2 versehen, in die ein Stützstift 3 eingeschraubt ist. Der Stützstift 3 trägt im Bereich seines zylindrischen Schafts 9 ein Gewinde 4, das es erlaubt, den Abstand der Stützstiftspitze 5 von der Unterseite der Bißplatte 1 einzustellen. Der zylindrische Schaft 9 geht in einen sich nach unten konisch verjüngenden kegelstumpfförmigen Zwischenteil 6 über, der an seinem verjüngten Ende die Stützstiftspitze 5 in Form eines Kugelsegments trägt. Das Kugelsegment hat einen Durchmesser, der größer als der Durchmesser des verjüngten Endes des Kegelstumpfs 6 ist. Die kugelige frei liegende Oberfläche des Kugelsegments reicht von dem auf der Längsachse 14 liegenden vorderen Stützstiftende allseitig um einen Winkel von mindestens 100° und vorzugsweise mindestens 125° nach hinten, so daß die starre Verbindungsstelle zwischen der kugeligen Spitze 5 und dem kegelstumpfförmigen Zwischenteil 6 auf der von dem Stützstiftende abgewendeten Seite des zur Achse 14 senkrechten Großkreises des Kugelsegments liegt. Im Bereich des Zwischenteils 6 sind Abflachungen 39 vorgesehen, die ein Drehen des Stützstiftes 3 mittels eines schraubenschlüsselartigen Werkzeuges (nicht gezeigt) zulassen.

Die Unterkiefer-Bißplatte 8 ist vorzugsweise gleichfalls aus faserverstärktem Kunststoff gefertigt. Sie hat zweckmäßig etwa die gleiche Dicke wie die Bißplatte 1. Auf ihrer der Bißplatte 1 zugekehrten Oberseite kann sich ein Farbstoffauftrag befinden. Die Bißplatten 1 und 8 überdecken die Fläche, die der Zahnbogen eines Oberkiefers bzw. Unterkiefers beschreibt. Das heißt, sie haben eine Größe entsprechend der vom Zahnbogen, dem Alveolarkamm oder der Residualleiste eines Oberkiefers bzw. Unterkiefers umschlossenen Fläche mit einer dorsalen Begrenzung im Tuber- und Retromolarbereich. Falls erwünscht, können die Bißplatten in dieser Grundform in verschiedenen Größen hergestellt werden. Das Außengewinde 4 des Stützstifts 3 hat einen Durchmesser, der etwas größer als derjenige des Gewindes der Gebindebohrung 2 ist.

Als Lochplatte (Retentionsplatte) kann einfach eine kreisförmige Scheibe 10 mit einer kreisrunden Mittelöffnung 11 vorgesehen sein. Wie gezeigt, hat die Lochplatte 10 eine Dicke, die kleiner als der Radius des Kugelsegments 5 ist. Die Dicke der Lochplatte 10, der Durchmesser der Öffnung 11 und der Durchmesser des Kugelsegments 5 sind derart aufeinander abgestimmt, daß sich der obere Rand 13 der Lochplattenöffnung 11 gegen die kugelige Oberfläche spielfrei anlegt, wenn die Stützstiftspitze auf der Oberseite der Bißplatte 8 aufsitzt. Beispielsweise kann das Kugelsegment einen Durchmesser von 1,61 mm haben, der Durchmesser der Öffnung 11 1,4 mm betragen und die Lochplatte 10 0,4 mm dick sein. Beim Schließen des Unterkiefers sinkt dabei das Kugelsegment um 0,4 mm in die Lochplattenöffnung ein; es trifft die Oberseite der Bißplatte 8 im Zentrum der Öffnung 11. Es versteht sich, daß ohne weiteres auch mit anderen Abmessungen gearbeitet werden kann, so lange nur sichergestellt ist, daß die frei liegende kugelige Oberfläche der Stützstiftspitze 5 von dem auf der Längsachse 14 des Stützstifts 3 liegenden vorderen Stützstiftende aus so weit nach hinten reicht, daß auch bei der größten zu erwartenden gegenseitigen Verkantung der Bißplatten 1, 8 der Rand 13 der Öffnung 1 noch entlang seinem vollen Umfang an der kugeligen Oberfläche anliegt.

Das Registrierbesteck wird wie folgt angewendet:

Die Bißplatten 1 und 8 werden im Ober- bzw. Unterkiefer des Patienten befestigt. Bei zahnlosen Kiefern kann dies dadurch geschehen, daß in den Kiefer zunächst eine geeignet geformte Kunststoffbasisplatte eingesetzt wird, die sich am Kiefer durch Ausbildung eines Unterdrucks festsaugt. Auf der Basisplatte wird die betreffende Bißplatte dann mittels Wachses oder Kunststoffs festgelegt. Im Falle von teilbezahnten Kiefern kann die entsprechend ausgeschnittene Bißplatte an einem Wachs- oder Kunststoffwall der Basisplatte mittels Kunststoffs oder Wachs befestigt werden. Stehen die Zähne günstig, wird die Bißplatte ohne Verwendung einer Basisplatte mit Kunststoff unmittelbar an den Zähnen festgemacht. Allgemein wird die Bißplatte so gelagert, wie es der Lagerung des definitiven Zahnersatzes entspricht, d. h. gingival, dental oder gewünscht gingival-dental.

Der Patient schließt nun die Kiefer. Wegen der Kugelform der Stützstiftspitze kann die ihr zugekehrte Oberfläche der Bißplatte 8 zum Zwecke der Aufzeichnung der Registrierung in beliebiger Schräglage an die Stützstiftspitze herangebracht werden. Wenn der Patient dann mit dem Unterkiefer Gleitbewegungen ausführt, bildet die Stützstiftspitze 5 auf der Bißplatte 8 bzw. in deren Farbauftrag den in Fig. 1 bei 12 angedeuteten Pfeilwinkel aus. Auch ein Arbeiten mit einem nur der Spitze des Pfeilwinkels entsprechenden Bißpunkt, erhalten als Abdruck der Stützstiftspitze im Farbauftrag bei Schließen der Kiefer ohne zusätzliche Gleitbewegungen, ist möglich.

Der Platz zwischen der zeichnenden Kugelperipherie und dem Äquator der Kugel kann ohne Störung und Bißerhöhung zur Retention benutzt werden. So kann nach Aufzeichnung des Pfeilwinkels 12 um dessen Spitze als Mittelpunkt mit dem Zirkel ein Kreis von beispielsweise 2 cm Durchmesser geschlagen werden. Die Lochplatte 10, deren Durchmesser in diesem Beispiel zweckmäßig gleichfalls 2 cm beträgt, wird nun mit diesem Kreis zur Deckung gebracht und auf der Bißplatte 8 beispielsweise mit Wachs oder Kaltplast befestigt. Die Lochplatte kann aber auch aus Folienmaterial mit einem Selbstklebeüberzug gefertigt sein. Durch die zuvor erläuterte Art der Anbringung der Lochplatte wird die Längsmittelachse der Öffnung 11 mit der Spitze des Pfeilwinkels 12 zentriert.

Für die Schlußbißnahme werden die Bißplatten 1, 8 erneut in die Mundhöhle eingesetzt. Der Patient schließt die Kiefer mit leichtem Druck. Dabei legt sich die Stützstiftspitze 5 in der in Fig. 2 veranschaulichten Weise in die Öffnung 11 ein. Zwei oder drei zuvor auf die untere Bißplatte 8 aufgetragene Häufchen aus schnellhärtendem Kunststoff verbinden die beiden Bißplatten 1, 8 in der derart registrierten Stellung.

Dabei ist wesentlich, daß der jeweils unterste Punkt des mit dem Schaft 9 starr verbundenen Kugelsegments immer an dem durch die Lochplattenöffnung 11 vorgegebenen gleichen Punkt die Oberseite der Bißplatte 8 tangiert. Dieser Berührungspunkt liegt auf der Längsmittelachse der Öffnung 11, unabhängig davon, ob die Längsmittelachse 14 des Stützstifts 3 damit entsprechend der Darstellung nach Fig. 2 ausgerichtet ist oder eine verkantete Lage einnimmt, wie dies beispielsweise bei 14' angedeutet ist. Mit anderen Worten, unabhängig davon, ob die Bißplatten 1, 8 parallel miteinander ausgerichtet sind oder nicht und unabhängig von der kreisförmigen Schließbewegung des Unterkiefers, trifft die Stützstiftspitze stets die Spitze des Pfeilwinkels 12, ohne an der Lochplatte in einer die Registrierung verfälschenden Weise anzustoßen, zu verkanten und dadurch die Kondylen zu dislozieren. Der Platzbedarf zwischen den Bißplatten ist gering.

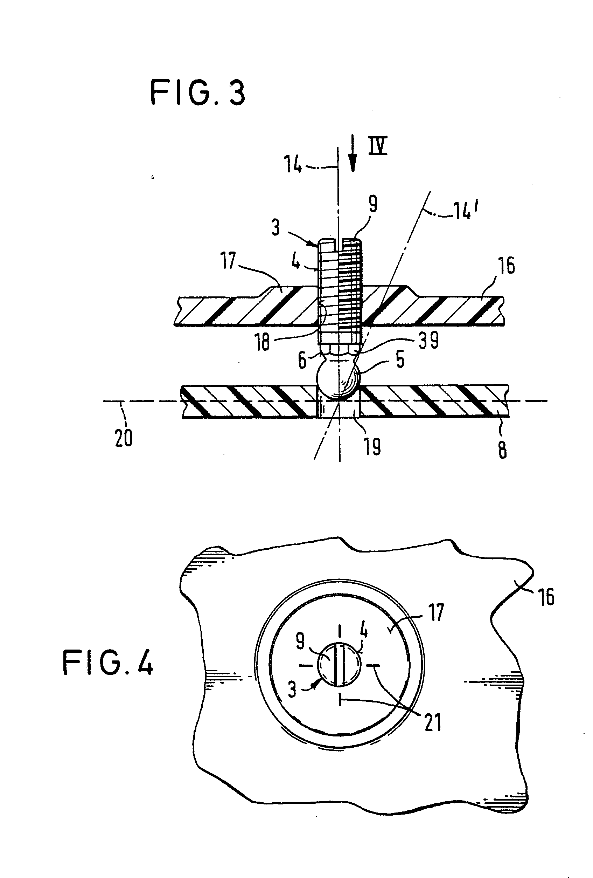

Bei der Ausführungsform nach den Fig. 3 und 4 wird ohne Lochplatte gearbeitet. Die obere Bißplatte 16 ist im Bereich des Stützstifts 3 mit einer Verstärkung 17 ausgestattet. Der Stützstift 3 sitzt in einer Gewindebohrung 18 im Zentrum des verstärkten Bißplattenteils. Die Aufzeichnung des Pfeilwinkels oder Bißpunktes geschieht in der gleichen Weise, wie dies anhand der Fig. 1 und 2 erläutert ist. Statt wie dort konzentrisch zur Pfeilwinkelspitze eine Lochscheibe aufzusetzen, wird die untere Bißplatte 8 an der registrierten Pfeilwinkelspitze durchbohrt. Dafür kann ein in der zahnärztlichen Praxis üblicherweise vorhandener Rosenbohrer benutzt werden. Der Durchmesser der Bohrung 19 ist ebenso wie der Durchmesser der Lochplatte 10 der Ausführungsform nach den Fig. 1 und 2 um einen vorbestimmten Betrag kleiner als der Durchmesser der kugelsegmentförmigen Spitze 5. Bei der Schlußbißnahme sinkt daher das Kugelsegment in die Bohrung 19 bis zu einer (gedachten) Ebene 20 ein, die von der der Bißplatte 16 zugewendeten Oberseite der Bißplatte 8 einen vorbestimmten Abstand hat. Diese Methode ist besonders einfach, schnell und platzsparend, so daß sie vor allem bei geringem Kieferabstand angewendet werden kann.

Um die Einsinktiefe der Spitze 5 auszugleichen und sicherzustellen, daß der gegenseitige Abstand der Bißplatten 8, 16 bei der Pfeilwinkelaufzeichnung und bei der Schlußbißnahme der gleiche ist, wird der Stützstift 3 im Anschluß an das Aufzeichnen des Pfeilwinkels und vor der Schlußbißnahme um einen Betrag vorgeschraubt, der gleich der Einsinktiefe der Spitze 5 ist. Für diesen Zweck sind vorzugsweise die die Einsinktiefe bestimmende gegenseitige Relation von Kugel- und Bohrlochdurchmesser sowie die Gewindesteigung des Stützstifts 3 derart aufeinander abgestimmt, daß eine Drehung des Stützstifts um einen Winkel von beispielsweise 180° oder 360° einer Vorbewegung des Stützstifts 3 um die Einsinktiefe entspricht.

Das Nachstellen des Stützstifts 3 vor der Schlußbißnahme gestaltet sich besonders einfach, wenn an der Oberseite der Bißplatte 16 und gegebenenfalls auch an dem Stützstift 3 Markierungen vorgesehen sind, wie sie in Fig. 4 bei 21 angedeutet sind. Auch die planen, sich gegenüberliegenden Abflachungen 39 können zur Einstellung des Stützstifts genutzt werden.

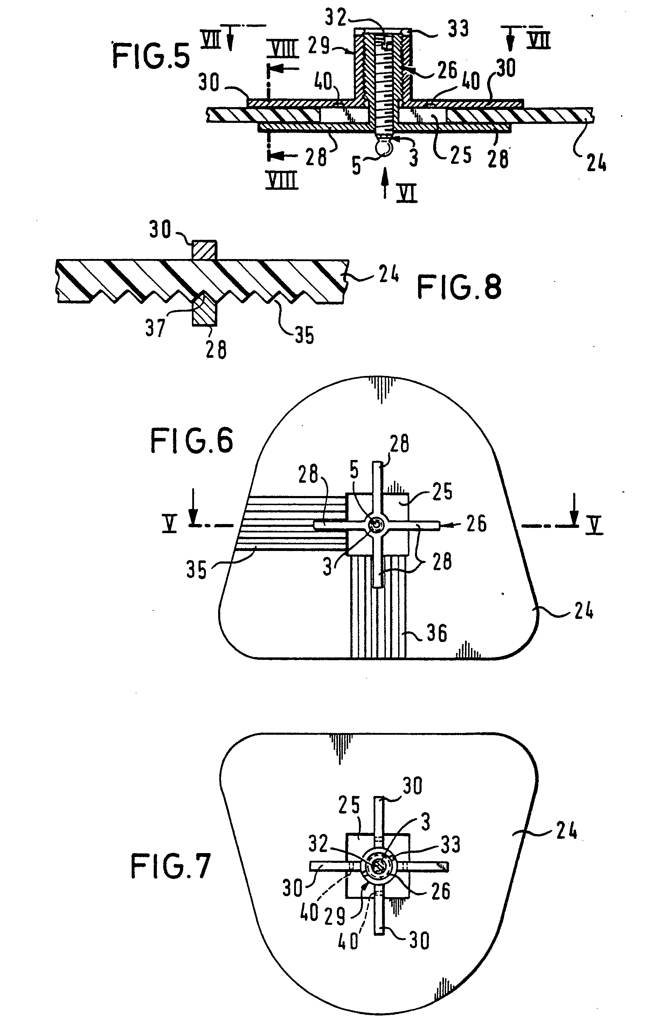

Bei der in den Fig. 5 bis 8 veranschaulichten Ausführungsform ist die Oberkiefer-Bißplatte 24 mit einer quadratischen Ausnehmung 25 versehen, durch die sich der Stützstift 3 senkrecht zur Bißplattenebene hindurcherstreckt. Der Stützstift 3 ist in eine Gewindebuchse 26 eingeschraubt und steht mit seiner Spitze 5 über das in Fig. 5 untere Ende der Gewindebuchse 26 vor.

Die Gewindebuchse 26 ist, wie insbesondere aus Fig. 6 hervorgeht, mit vier in einem gegenseitigen Winkel von 90° stehenden Radialansätzen 28 versehen, die von ausreichender Länge sind, um die Ausnehmung 25 in jeder beliebigen Relativstellung von Gewindebuchse 26 und Bißplatte 24 zu übergreifen. Auf das in Fig. 5 über die Bißplatte 24 nach oben vorstehende, Außengewinde tragende Ende der Gewindebuchse 26 ist eine Spannmutter 29 aufgeschraubt, die bei der veranschaulichten Ausführungsform den Radialansätzen 28 der Gewindebuchse 26 entsprechende Radialansätze 30 aufweist.

Wie aus den Fig. 5, 6 und 7 hervorgeht, legen sich in jeder beliebigen gegenseitigen Stellung von Stützstift 3 und Bißplatte 24 die Radialansätze 28, 30 gegen die beiden Breitseiten der Bißplatte 24 an. Durch Anziehen der Spannmutter 29 läßt sich die Lage der Stützstiftachse mit Bezug auf die Bißplattenebene fixieren. Nach Lösen der Spannmutter kann die aus Stützstift 3, Gewindebuchse 26 und Spannmutter 29 bestehende Einheit gegenüber der Bißplatte 24 bequem verstellt werden. Indem der Stützstift 3 aus der Gewindebuchse 26 mehr oder minder weit herausgeschraubt wird, erfolgt eine Einstellung des Stützstifts in der dritten Richtung. Zum Erleichtern der Verstellung von Stützstift und Spannmutter sind diese mit Querschlitzen 32 bzw. 33 ausgestattet. Um die Spannmutter 29 auch nach dem Einsetzen der Bißplatte 24 in der Mundhöhle bequem einstellen zu können, sind Ausnehmungen 40 vorgesehen, die mit komplementären Vorsprüngen eines Werkzeuges (nicht dargestellt) in Eingriff gebracht werden können.

Die Bißplatte 24 trägt an der mit den Radialansätzen 28 der Gewindebuchse 26 zusammenwirkenden Unterseite zwei rechtwinklig zueinander verlaufende, eingravierte Graduierungen 35, 36, die jeweils bis zu dem betreffenden Rand der Ausnehmung 25 reichen. Wie im einzelnen aus Fig. 8 hervorgeht, haben die den Graduierungen 35, 36 gegenüberstehenden Radialansätze ein zu der Graduierung komplementäres, beispielsweise schneidenartiges Oberflächenprofil 37. Nach Lösen der Spannmutter 29 kann daher der Stützstift 3 in Längs- und Querrichtung der Bißplatte 24 in Schritten rastend verstellt werden, die der Unterteilung der Graduierungen 35, 36 entsprechen. Dabei versteht es sich, daß die Teilung der Graduierungen nicht auf die in den Fig. 6 und 8 schematisch dargestellte Anzahl von Schritten beschränkt ist. Hat beispielsweise die Ausnehmung 25 eine Kantenlänge von 15 mm, können Graduierungen mit 15 Schritten vorgesehen sein, um eine millimeterweise Verstellung des Stützstifts 3 in der Ebene der Bißplatte 24 zu ermöglichen. Die Graduierungen 35, 36 bilden zusammen mit den Radialansätzen 28 Verdrehsicherungen, die eine Drehbewegung der Gewindebuchse 26 beim Lösen und Festziehen der Spannmutter 29 verhindern.

## Patentansprüche

1. Intraorales Registrierbesteck für die Zahnprothetik, die Okklusionsdiagnostik und/oder die Okklusionstherapie mit starren Ober- und Unterkiefer-Bißplatten (1, 8, 24), von denen die eine mit einer durchgehenden Gewindebohrung (2, 26) versehen ist, in die ein Stützstift (3) eingeschraubt ist, dessen Spitze (5) kugelig ausgebildet und für die Schlußbißnahme mit einer Öffnung (11) einer auf der anderen Bißplatte (8) festlegbaren Lochplatte (10) in Eingriff gebracht wird, dadurch gekennzeichnet, daß die Bißplatten (1, 8, 24) aus steifem Kunststoff bestehen und die Form einer vom Zahnbogen, dem Alveolarkamm oder der Residualleiste eines Oberkiefers bzw. Unterkiefers umschlossenen Flächenebene haben, daß die kugelige Stützstiftspitze (5) als Kugelsegment ausgebildet ist, dessen frei liegende kugelige Oberfläche von dem auf der Längsachse (14) des Stützstifts (3) liegenden vorderen Stützstiftende allseitig um einen Winkel von mindestens 100° nach hinten reicht, derart, daß selbst bei der größten zu erwartenden gegenseitigen Verkantung der Bißplatten (1, 8, 24) der der einen Bißplatte zugewendete Rand (13) der Öffnung (11) noch entlang seinem vollen Umfang an der kugeligen Oberfläche anliegt, und daß die Tiefe und der Durchmesser der Öffnung (11) sowie der Durchmesser des Kugelsegments derart aufeinander abgestimmt sind, daß bei der Anlage der Stützstiftspitze (5) an der anderen Bißplatte (8) der der einen Bißplatte (1, 24) zugewendete Rand (13) der Öffnung (11) mit der kugeligen Oberfläche praktisch spielfrei in Kontakt steht.

2. Intraorales Registrierbesteck für die Zahnprothetik, die Okklusionsdiagnostik und/oder die Okklusionstherapie mit aus steifem Kunststoff bestehenden starren Ober- und Unterkiefer-Bißplatten (8, 16), von denen die eine mit einer durchgehenden Gewindebohrung (18) versehen ist, in die ein Stützstift (3) eingeschraubt ist, dessen Spitze (5) für die Schlußbißnahme mit einer Bohrung (19) in der anderen Bißplatte (8) in Eingriff gebracht wird, dadurch gekennzeichnet, daß die Bißplatten (8, 16) die Form einer vom Zahnbogen, dem Alveolarkamm oder der Residualleiste eines Oberkiefers bzw. Unterkiefers umschlossenen Flächenebene haben, daß die Stützstiftspitze (5) als mit dem Stützstiftschaft (9) starr verbundenes Kugelsegment ausgebildet ist, daß die Bohrung (19) einen Durchmesser hat, der um einen vorbestimmten Betrag kleiner als der Durchmesser des Kugelsegments ist, daß die frei liegende Oberfläche des Kugelsegments von dem auf der Längsachse (14) des Stützstifts (3) liegenden vorderen Stützstiftende allseitig um einen Winkel von mindestens 100° nach hinten reicht, derart, daß selbst bei der größten zu erwartenden gegenseitigen Verkantung der Bißplatten (8, 16) der der einen Bißplatte zugewendete Rand der Bohrung (19) noch entlang seinem vollen Umfang an der kugeligen Oberfläche anliegt, sowie daß die eine Bißplatte (16) Markierungen (21) zur genauen Anzeige der axialen Stützstiftverstellung in Abhängigkeit von der Größe der Stützstiftverdrehung zwecks Kompensation der Einsinktiefe der Stützstiftspitze (5) in der Bohrung (19) trägt.

3. Registrierbesteck nach Anspruch 1 oder 2, dadurch gekennzeichnet, daß die Oberfläche des Kugelsegments sich symmetrisch zum vorderen Stützstiftende über einen Raumwinkel von 220° bis 320°, vorzugsweise von 250° bis 320°, erstreckt.

4. Registrierbesteck nach einem der Ansprüche 1 bis 3, dadurch gekennzeichnet, daß die kugelige Stützstiftspitze (5) an der dem Stützstiftschaft (9) zugewendeten Seite auf einem an seinem breiteren Ende mit dem Stützstiftschaft verbundenen Kegelstumpf (6) aufsitzt, dessen mit der kugeligen Stützstiftspitze verbundenes verjüngtes Ende einen kleineren Durchmesser als den Kugeldurchmesser hat.

5. Registrierbesteck nach einem der vorhergehenden Ansprüche, dadurch gekennzeichnet, daß der an die kugelige Stützstiftspitze (5) anschließende Teil des Stützstifts (3) mit mindestens zwei einander gegenüberliegenden Abflachungen (39) versehen ist, die mit einem Werkzeug zum Drehen des Stützstiftes in Eingriff gebracht werden.

6. Registrierbesteck nach Anspruch 1, dadurch gekennzeichnet, daß die Lochplatte (10) als kreisförmige Scheibe ausgebildet ist.

7. Registrierbesteck nach Anspruch 1 oder 6, dadurch gekennzeichnet, daß die Lochplatte (10) als Selbstklebeteil ausgebildet ist.

8. Registrierbesteck nach einem der Ansprüche 1, 6 oder 7, dadurch gekennzeichnet, daß die Lochplatte (10) aus Folienmaterial besteht.

9. Registrierbesteck nach einem der vorhergehenden Ansprüche, dadurch gekennzeichnet, daß die Bißplatten (1, 8, 16, 24) mit einer Verstärkung aus Glasfasern, Kohlefasern oder Metall versehen sind.

10. Registrierbesteck nach einem der vorhergehenden Ansprüche, dadurch gekennzeichnet, daß mindestens eine der Bißplatten (16) in ihrem mittleren Bereich verdickt ist.

11. Registrierbesteck nach einem der vorhergehenden Ansprüche, dadurch gekennzeichnet, daß das Außengewinde (4) des Stützstifts (3) einen etwas größeren Durchmesser als die den Stützstift aufnehmende Gewindebohrung (2) hat.

12. Registrierbesteck nach einem der vorhergehenden Ansprüche, dadurch gekennzeichnet, daß die den Stützstift (3) aufnehmende Gewindebohrung (2) an einer im wesentlichen mit dem Schwerpunkt der Unterkieferspange ausgerichteten Stelle der einen Bißplatte (1, 16, 24) angeordnet ist.

13. Registrierbesteck nach einem der vorhergehenden Ansprüche, dadurch gekennzeichnet, daß die den Stützstift (3) tragende Bißplatte (1) mit einem den Stützstift (3) aufnehmenden Gewindestutzen (7) versehen ist, der von der der anderen Bißplatte (8) abgewendeten Seite der einen Bißplatte (1) vorsteht.

14. Registrierbesteck nach einem der Ansprüche 1 bis 13, dadurch gekennzeichnet, daß eine zur Aufnahme des Stützstifts (3) dienende Gewindebuchse (26) in einer Ausnehmung (25) der einen Bißplatte (24) in zwei in der Bißplatte liegenden, zur Stützstiftachse senkrechten Richtungen verstellbar geführt und über einen von der Gewindebuchse radial nach außen vorspringenden Klemmansatz (28) sowie eine auf die Gewindebuchse aufgeschraubte Spannmutter (29) fixierbar ist und daß sowohl der auf der einen Seite der einen Bißplatte (24) angeordnete Klemmansatz (28) der Gewindebuchse (26) als auch die auf der anderen Bißplattenseite liegende Spannmutter (29) mit die Ausnehmung (25) der einen Bißplatte (24) in jeder beliebigen Relativstellung von Gewindebuchse und Bißplatte übergreifenden Teilen versehen sind, die sich zwecks Fixierung der Gewindebuchse an die gegenüberliegenden Öffnungsränder der einen Bißplatte anlegen.

15. Registrierbesteck nach Anspruch 14, dadurch gekennzeichnet, daß die Gewindebuchse (26) und/oder die Spannmutter (29) mit flügelförmigen Radialansätzen (28, 30) versehen sind.

16. Registrierbesteck nach Ansprüchen 14 und 15, dadurch gekennzeichnet, daß die Gewindebuchse (26) und/oder die Spannmutter (29) jeweils vier in einem gegenseitigen Winkel von 90° stehende Radialansätze (28, 30) tragen.

17. Registrierbesteck nach Anspruch 15 oder 16, dadurch gekennzeichnet, daß die eine Bißplatte (24) an der mit den Radialansätzen (28) der Gewindebuchse (26) zusammenwirkenden Breitseite zwei rechtwinklig zueinander verlaufende, eingravierte Graduierungen (35, 36) trägt.

18. Registrierbesteck nach Anspruch 17, dadurch gekennzeichnet, daß die den eingravierten Graduierungen (35, 36) zugewendeten Seiten der Radialansätze (28) ein zu der Graduierung komplementäres Oberflächenprofil (37) haben.

## Claims

1. A set of intraoral registering instruments for dental prosthetics, occlusion diagnosis and/or occlusion therapy with rigid bite plates (1, 8, 24) for the upper and lower jaw, one of which is provided with a tapped hole (2, 26) passing through it, into which a supporting pin (3) is screwed, the tip (5) of which is spherical in construction and is brought into engagement with an aperture (11) in a perforated plate (10) which can be located on the other bite plate (8) for taking the occlusion of the teeth, characterised in that the bite plates (1, 8, 24) consist of rigid plastics material and have the shape of a surface plane enclosed by the dental arch, the alveolar ridge or the residual shelf of an upper jaw or lower jaw, that the spherical tip (5) of the supporting pin is constructed in the form of a spherical segment of which the spherical surface extends from the front end of the supporting pin, lying on the longitudinal axis (14) of the supporting pin (3), towards the rear on all sides through an angle of at least 100° in such a manner that even in the event of the maximum mutual tilting of the bite plates (1, 8, 24) to be expected, the edge (13) of the aperture (11) facing the one bite plate still bears against the spherical surface along its whole circumference, and that the depth and the diameter of the aperture (11) as well as the diameter of the spherical segment are adapted to one another in such a manner that when the tip (5) of the supporting pin bears against the other bite plate (8), the edge (13) of the aperture (11) facing the one bite plate (1, 24) is in contact with the spherical surface practically without clearance.

2. A set of intraoral registering instruments for dental prosthetics, occlusion diagnosis and/or occlusion therapy with rigid bite plates (8, 16) for the upper and lower jaw consisting of rigid plastics material, one of which is provided with a tapped hole (18) passing through it, into which a supporting pin (3) is screwed, the tip (5) of which is brought into engagement with a bore (19) in the other bite plate (8) for taking the occlusion of the teeth, characterised in that the bite plates (8, 16) have the shape of a surface plane enclosed by the dental arch, the alveolar ridge or the residual shelf of an upper jaw or lower jaw, that the tip (5) of the supporting pin is constructed in the form of a spherical segment rigidly connected to the shank (9) of the supporting pin, that the bore (19) has a diameter which is smaller, by a predetermined amount, than the diameter of the spherical segment, that the exposed surface of the spherical segment extends from the front end of the supporting pin, lying on the longitudinal axis (14) of the supporting pin (3) towards the rear on all sides over an angle of at least 100° in such a manner that even in the event of the maximum mutual tilting of the bite plates (8, 16) to be expected, the edge of the bore (19) facing the one bite plate still bears against the spherical surface along its whole circumference, and that the one bite plate (16) carries markings (21) for the precise indication of the axial displacement of the supporting pin depending on the magnitude of the rotation of the supporting pin for the purpose of compensating the depth to which the tip (5) of the supporting pin sinks into the bore (19).

3. A set of registering instruments as claimed in Claim 1 or 2, characterised in that the surface of the spherical segment extends symmetrically to the front end of the supporting pin over a solid angle of 220° to 320°, preferably from 250° to 320°.

4. A set of registering instruments as claimed in one of Claims 1 to 3, characterised in that the spherical tip (5) of the supporting pin is mounted, at the side adjacent to the shank (9) of the supporting pin, on a truncated cone (6) which is connected to the shank of the supporting pin at its broader end and the narrowed end of which, connected to the spherical tip of the supporting pin, has a smaller diameter than the diameter of the sphere.

5. A set of registering instruments as claimed in one of the preceding Claims, characterised in that the portion of the supporting pin (3) following on the spherical tip (5) of the supporting pin is provided with at least two flats (39) which are situated opposite one another and which are brought into engagement with a tool for rotating the supporting pin.

6. A set of registering instruments as claimed in Claim 1, characterised in that the perforated plate (10) is constructed in the form of a circular disc.

7. A set of registering instruments as claimed in Claim 1 or 6, characterised in that the perforated plate (10) is constructed in the form of a selfadhesive part.

8. A set of registering instruments as claimed in one of the Claims 1, 6 or 7, characterised in that the perforated plate (10) consists of foil material.

9. A set of registering instruments as claimed in one of the preceding Claims, characterised in that the bite plates (1, 8, 16, 24) are provided with a reinforcement of glass fibres, carbon fibres or metal.

10. A set of registering instruments as claimed in one of the preceding Claims, characterised in that at least one of the bite plates (16) is thickened in its central region.

11. A set of registering instruments as claimed in one of the preceding Claims, characterised in that the external thread (4) of the supporting pin (3) has a somewhat larger diameter than the tapped hole (2) receiving the supporting pin.

12. A set of registering instruments as claimed in one of the preceding Claims, characterised in that the tapped hole (2) receiving the supporting pin (3) is disposed at a position on the one bite plate (1, 16, 24) which is substantially aligned with the centre of gravity of the clasp of the lower jaw.

13. A set of registering instruments as claimed in one of the preceding Claims, characterised in that the bite plate (1) carrying the supporting pin (3) is provided with a tapped socket (7) which receives the supporting pin (3) and which projects from the side of the one bite plate (1) remote from the other bite plate (8).

14. A set of registering instruments as claimed in one of the Claims 1 to 13, characterised in that a threaded bush (26) serving to receive the supporting pin (3) is guided in a recess (25) in the one bite plate (24) for adjustment in two directions situated in the bite plate and perpendicular to the axis of the supporting pin and can be located via a clamping extension (28) projecting radially outwards from the threaded bush and a tightening nut (29) screwed onto the threaded bush and that both the clamping extension (28) of the threaded bush (26) disposed at the one side of the one bite plate (24) and the tightening nut (29) situated at the other side of the bite plate are provided with parts which engage over the recess (25) in the one bite plate (24) in every relative position of threaded bush and bite plate and which bear against the opposite edges of the aperture in the one bite plate for the purpose of locating the threaded bush.

15. A set of registering instruments as claimed in Claim 14, characterised in that the threaded bush (26) and/or the tightening nut (29) are provided with wingshaped radial extensions (28, 30).

16. A set of registering instruments as claimed in Claim 14 and 15, characterised in that the threaded bush (26) and/or the tightening nut (29) each carry four radial extensions (28, 30) at a mutual angle of 90°.

17. A set of registering instruments as claimed in Claim 15 or 16, characterised in that the one bite plate (24) carries two engraved graduations (35, 36) extending at right angles to one another at the broad side cooperating with the radial extensions (28) of the threaded bush (26).

18. A set of registering instruments as claimed in Claim 17, characterised in that the sides of the radial extensions (28) adjacent to the engraved graduations (35, 36) have a surface profile (37) complementary to the graduation.

## Revendications

1. Dispositif de repérage intra-oral pour la prothèse dentaire, le diagnostic d'occlusions et/ou l'occlusionothérapie qui comprend des plaquettes orales rigides pour les mâchoires supérieure et inférieure (1, 8, 24), dont l'une est percée d'un trou taraudé (2, 26), dans laquelle est vissée une goupille de contact (3) dont la pointe (5) a une forme sphérique et qui, pour la prise d'empreinte, peut s'engager dans une ouverture (11) d'une plaquette perforée (10) pouvant être fixée sur l'autre plaquette orale (8), caractérisé en ce que les plaquettes orales (1, 8, 24) sont en une matière plastique rigide et ont la forme de l'aire d'une surface délimitée par l'arc dentaire, par le peigne alvéolaire ou par la barrette résiduelle d'une mâchoire supérieure ou inférieure, en ce que la pointe sphérique (5) de la goupille de contact présente la forme d'un segment sphérique, dont la surface sphérique libre s'étend vers l'arrière, dans toutes les directions, à partir de l'extrémité antérieure de la goupille située sur l'axe longitudinal (14) de la goupille de contact (3), suivant un angle d'au moins 100°, en ce que, même sous les inclinaisons mutuelles les plus importantes prévisibles entre les plaquettes orales (1, 8, 24), le bord (13) de l'une des plaquettes orales qui est tourné vers l'ouverture (11) vient encore se placer tout entier contre la surface sphérique, et en ce que la profondeur et le diamètre de l'ouverture (11), ainsi que le diamètre du segment sphérique sont calculés l'un par rapport à l'autre, de façon que quand la pointe (5) de la goupille de contact vient s'appliquer contre l'autre plaquette orale (8), le bord (13) de l'ouverture (11) tourné vers la première plaquette orale (1, 24) est au contact, pratiquement sans jeu, avec la surface sphérique.

2. Dispositif de repérage intra-oral pour la prothèse dentaire, le diagnostic des occlusions et/ou l'occlusionothérapie comprenant des plaquettes orales (8, 16) pour les mâchoires supérieure et inférieure, dont l'une est percée d'un trou taraudé (18) dans lequel est vissée une goupille de contact (3) dont la pointe s'engage, pour la prise d'empreinte, dans une ouverture (19) de l'autre plaquette orale, caractérisé en ce que les plaquettes orales (8, 16) ont la forme de l'aire d'une surface délimitée par l'arc dentaire, le peigne alvéolaire ou la barrette résiduelle d'une mâchoire supérieure ou inférieure, en ce que la pointe (5) de la goupille de contact a la forme d'un segment sphérique relié invariablement à la tige (9) de la goupille de contact, en ce que l'ouverture (19) a un diamètre qui est, dans une mesure prédéterminée, plus petit que le diamètre du segment sphérique, en ce que la surface libre du segment sphérique s'étend vers l'arrière, à partir de l'extrémité antérieure de la goupille de contact située sur l'axe longitudinal (14) de ladite goupille de contact (3), dans toutes les directions, d'un angle d'au moins 100°, de sorte que, même avec les plus grandes inclinaisons mutuelles prévisibles entre les plaquettes orales (8, 16), le bord de l'ouverture (19) tourné vers l'une des plaquettes orales vient s'appliquer tout entier contre la surface sphérique, et en ce que, sur l'une des plaquettes orales (16), sont prévus des repères (21) qui indiquent avec précision le décalage axial de la goupille de contact en fonction de l'importance de la rotation de ladite goupille, afin de compenser la profondeur de pénétration de la pointe (5) de la goupille de contact dans l'ouverture (19).

3. Dispositif de repérage selon la revendication 1 ou 2, caractérisé en ce que la surface du segment sphérique s'étend, symétriquement à l'extrémité antérieure de la goupille de contact, sur un angle solide de 220° à 320°, de préférence, de 250° à 320°.

4. Dispositif de repérage selon l'une quelconque des revendications 1 à 3, caractérisé en ce que la pointe sphérique (5) de la goupille de contact repose, sur le côte tourné vers la tige (9) de la goupille de contact, sur un tronc de cône (6) dont la grande base est reliée à la tige de la goupille, et dont la petite base, reliée à la pointe de la goupille de contact, a un plus petit diamètre que celui de la sphère.

5. Dispositif de repérage selon l'une quelconque des revendications précédentes, caractérisé en ce que la partie de la goupille de contact (3) faisant suite à la pointe sphérique (5) de celle-ci présente, au moins, deux plats opposés (39) contre lesquels on peut appliquer un outil pour tourner la goupille de contact.

6. Dispositif de repérage selon la revendication 1, caractérisé en ce que la plaque perforée (10) présente la forme d'une rondelle circulaire.

7. Dispositif de repérage selon la revendication 1 ou 6, caractérisé en ce que la plaquette perforée (10) est auto-adhésive.

8. Dispositif de repérage selon l'une quelconque des revendications 1, 6 ou 7, caractérisé en ce que la plaquette perforée (10) est faite d'une matière en feuille.

9. Dispositif de repérage selon l'une quelconque des revendications précédentes, caractérisé en ce que les plaquettes orales (1, 8, 16, 24) sont renforcées avec des fibres de verre, des fibres de carbone ou du métal.

10. Dispositif de repérage selon l'une quelconque des revendications précédentes, caractérisé en ce que la région centrale de l'une, au moins, des plaquettes orales (16) est renforcée.

11. Dispositif de repérage selon l'une quelconque des revendications précédentes, caractérisé en ce que le filetage extérieur (4) de la goupille de contact (3) a un diamètre légèrement supérieur à celui du trou taraudé (2) recevant ladite goupille de contact.

12. Dispositif de repérage selon l'une quelconque des revendications précédentes, caractérisé en ce que l'ouverture filetée (2) recevant la goupille de contact (3) occupe, sur l'une des plaquettes orales (1, 16, 24), une position alignée avec le centre de gravité de l'étrier de la mâchoire inférieure.

13. Dispositif de repérage selon l'une quelconque des revendications précédentes, caractérisé en ce que la plaquette orale (1) portant la goupille de contact (3) est pourvue d'une douille filetée (7) recevant ladite goupille de contact (3) qui fait saillie sur le côté de la plaquette orale (1) orientée à l'opposé de l'autre plaquette orale (8).

14. Dispositif de repérage selon l'une quelconque des revendications 1 à 13, caractérisé en ce qu'une douille filetée (26) servant à recevoir la goupille de contact (3) est guidée de façon réglable dans l'évidement (25) de l'une des plaquettes orales (24) suivant deux directions perpendiculaires à l'axe de la goupille de contact, situées dans la plaquette orale, et en ce que, au moyen d'un prolongement de serrage faisant saillie radialement à l'extérieur de la douille filetée, ainsi que par un écrou (29) vissé sur ladite douille filetée, celle-ci peut être fixée et en ce que aussi bien le prolongement de serrage (28) de la douille filetée (26) situé sur l'un des côtés de l'une des plaquettes orales (24) que l'écrou de serrage (29) situé de l'autre côté de la plaquette orale, comportent des parties s'étendant au-dessus de la douille filetée et de la plaquette orale, dans toutes les positions relatives de ces dernières, et qui, aux fins de fixation de la douille filetée, s'appliquent contre les bords opposés de l'ouverture de l'une des plaquettes orales.

15. Dispositif de repérage selon la revendication 14, caractérisé en ce que la douille filetée (26) et/ou l'écrou de serrage (29) sont pourvus de prolongements radiaux (28, 30) en forme d'ailes.

16. Dispositif de repérage selon les revendications 14 et 15, caractérisé en ce que la douille filetée (26) et/ou l'écrou de serrage (29) comportent respectivement, quatre prolongements radiaux (28, 30) espacés mutuellement de 90°.

17. Dispositif de repérage selon la revendication 15 ou 16, caractérisé en ce que l'une des plaquettes orales (24) comporte sur le côté coopérant avec les prolongements radiaux (28) de la douille filetée (26) deux graduations gravées, s'étendant à angle droit l'une par rapport à l'autre (35, 36).

18. Dispositif de repérage selon la revendication 17, caractérisé en ce que les côtés des prolongements radiaux (28) tournés vers les graduations gravées (35, 36) ont un profil superficiel (37) complémentaire à la graduation.

FIG.1

FIG.2

FIG. 3

FIG.4

FIG.5

FIG.8

FIG.6

FIG.7

0 006 157

17